# EUROPÄISCHE PATENTSCHRIFT

(11) **EP 2 843 808 B1**
(45) Veröffentlichungstag und Bekanntmachung des Hinweises auf die Patenterteilung: **10.07.2019**
(21) Anmeldenummer: 14182408.6
(22) Anmeldetag: 27.08.2014
(51) Int. Cl.: H02K 5/128

(54) **Spaltrohrmotor mit hockdruckfestem Spaltrohr**
Canned motor with pressure-resistant can
Moteur à gaine doté d'une gaine résistante à la haute pression

(30) Priorität: 02.09.2013 DE 102013109522
(43) Veröffentlichungstag der Anmeldung: 04.03.2015
(73) Patentinhaber: Rausch & Pausch GmbH, 95100 Selb (DE)
(72) Erfinder: Hudec, Julius, 35201 As (CZ)
(74) Vertreter: Klunker IP Patentanwälte PartG mbB

(56) Entgegenhaltungen:
- EP-A1- 1 376 822
- DE-A1- 10 232 389
- DE-A1-102009 047 454
- DE-A1-102010 011 316
- JP-A- 2009 284 704

## Beschreibung

Die Erfindung betrifft im Allgemeinen Spaltrohrmotoren. Im Besonderen betrifft die Erfindung eine Pumpe mit einem Spaltrohrmotor gemäße dem Oberbegriff des Anspruch 1.

Spaltrohrmotoren sind eine spezielle Ausführungsart eines Nassläufermotors, bei dem die Wicklung des Stators durch ein zylindrisches, möglichst dünnwandiges Rohr aus Edelstahl oder Kunststoff im Luftspalt zwischen Stator und Rotor des Motors gegen das Fördermedium geschützt ist. Der Leistungsbereich dieser Motoren liegt zwischen einigen Watt bis zu etwa 2.000 kW. Spaltrohrmotoren werden bevorzugt in Pumpenaggregaten eingesetzt.

EP 0 844 723 A2 zeigt beispielsweise eine Pumpe mit einem gattungsgemäßen Spaltrohrmotor. Der Raum, in dem der Stator angeordnet ist, und der Raum, in dem der Rotor angeordnet ist, sind flüssigkeitsdicht durch ein Spaltrohr aus Kunststoff voneinander getrennt. Um das Spaltrohr mit möglichst kleiner Wandstärke ausführen zu können, ist das Spaltrohr so dimensioniert, dass es an der Innenseite des Stators anliegt und gegen Innendruck durch den Stator gestützt wird.

Die Materialstärke des Spaltrohrs kann nicht beliebig vergrößert werden, um die Pumpe für höhere Betriebsdrücke auszulegen, da dadurch der Luftspalt zwischen Rotor und Stator sich ebenfalls entsprechend vergrößert und damit niedrigere Energiedichte im Arbeitsluftspalt und höhere Streufeldverluste verursacht. Daher besteht bei Spaltrohren aus Kunststoff das Problem, dass bei hohen Arbeitsdrücken, wie beispielsweise im Bereich 150 bar bis 300 bar und höher, die radiale Druckbelastung des Spaltrohrs an Stellen, die nicht durch den Stator abgestützt werden, derart hoch ist, dass der Kunststoff sich plastisch verformt und reißt bzw. abgeschert wird. Als Folge dringt Fördermedium in den Bereich der Statorwicklungen ein und beschädigt die Wicklung des Stators. Bei vergleichbaren Nassläufer-Pumpenaggregaten mit einem hochdruckfesten Spaltrohr aus Metall ist zwar die genannte Druckbelastung kein Problem, dafür betragen die Wirbelstrom- und Magnetfeldverluste im Spaltrohr je nach Leistungsklasse des Motors bis zu mehrere hundert Watt.

Aus der DE 10 2012 011 316 A1 als nächstliegender Stand der Technik ist ein Spaltrohrmotor bekannt, bei dem die Wicklung des Stators als Zahnspulenwicklung ausgeführt ist und T-förmige Stützelemente in den Wickelnuten vorgesehen sind, wobei ein vertikaler Teil der Stützelemente benachbarter Wicklungen innerhalb einer Wickelnut gegeneinander isoliert und das Stützelement am Nutgrund mechanisch abstützt. Ähnliche abgestützte Spaltrohre sind auch aus DE 2 101 672 A und der JP 2006-067 729 A bekannt.

Aus der DE 102 32 389 A1 ist ein Spaltrohrmotor bekannt, bei dem eine Kunststoffhülse vom Stator derart gestützt wird, dass sie hydraulisch mit hohem Innendruck belastet werden kann, und die Motorinduktivität verändert werden kann. Dazu sind bei einem Polschuhe aufweisenden Stator zwischen den Polschuhen Füllstücke aus Schichten von elektrisch isolierten Blechen derart angeordnet, dass sie unter Bildung einer geschlossenen Bohrung, die als Abstützung für die Kunststoffhülse dient, miteinander verbunden sind.

Aus der JP 2009-284704 A zeigt einen Spaltrohrmotor mit eine Spaltrohr, an dem im Querschnitt punktuelle Auflager bildende Verdickungen vorgesehen sind, sodass eine den Statorzähnen zugewandte Außenfläche des Spaltrohrs nicht an den Statorzahnstirnflächen anliegt. Ebenso wenig bilden Statorzahnköpfe der Statorzähne keine Auflager für Spaltrohrrippen, da diese nicht komplementär zur Kontur der Statorzahnköpfe geformt sind.

Aus der EP 1 1376 822 A1 ist ein Elektromotor bekannt mit von Statorwicklungen umgebenen, radial zum Rotor weisenden Statorpolen, wobei zwischen dem Stator und dem Rotor eine sich mindestens über die Länge des Rotors erstreckende, starre Isolierhülse angeordnet ist, die radial zum Rotor angeordnete Vorsprünge aufweist, wobei jeweils ein Vorsprung zwischen zwei benachbart angeordneten Statorpolen angeordnet ist.

DE 10 2009 047454 A1 zeigt einen Spaltrohr-Elektromotor für eine Pumpe, wobei eine formschlüssige oder stoffschlüssige Verbindung zwischen inneren Rändern von Polschenkeln einerseits und einem zylindrischen Trennkörper andererseits vorgesehen ist, sodass eine mechanische Stabilität des Stators gewährleistet ist, wobei die Wandstärke eines Polrings ausschließlich an die elektromagnetischen Erfordernisse angepasst sein kann.

Es ist eine Aufgabe der vorliegenden Erfindung, einen Spaltrohrmotor vorzuschlagen, der für den Einsatz bei hohen Förderdrücken geeignet ist, aber zur Meidung von Wirbelstrom- und Magnetfeldverlusten im Spaltrohr kein metallisches Spaltrohr benötigt.

Die Aufgabe wird mit den Merkmalen der unabhängigen Ansprüche gelöst. Weitere Merkmale und Details der Erfindung ergeben sich aus den Unteransprüchen, der Beschreibung und den Zeichnungen.

Der Kerngedanke der Erfindung besteht darin, ein Spaltrohr aus einem Material mit geringer elektrischer Leitfähigkeit, bevorzugt aus einem Kunststoff, an Stellen
mit hoher Betriebsdruckbelastung, im Wesentlichen an Stellen, an denen jeweils zwei benachbarte Statorzähne einen Spalt (Statorzahnspalt) bilden, lokal so zu verstärken und auszuformen, dass die Vergleichsspannungen (fiktive einachsige Spannung, die dieselbe Materialbeanspruchung darstellt wie der reale, mehrachsige Spannungszustand) im Spaltrohrmaterial besonders an diesen Stellen beim bestimmungsgemäßen Arbeitsdruck im Betrieb des Motors immer unter der Festigkeitsgrenze des eingesetzten Spaltrohrmaterials bleiben. Somit können als Spaltrohrmaterialen grundsätzlich Kunststoffe anstelle von Metall verwendet werden. Zur besseren Veranschaulichung werden hier Vergleichsspannungen angegeben, um den wirklichen dreidimensionalen Belastungszustand im Bauteil, bestehend aus Normal-Spannungen und Schub-Spannungen in alle drei Raumrichtungen, direkt mit den Kennwerten aus dem einachsigen Zugversuch (Material-Kennwerte) vergleichen zu können.

Durch die erfindungsgemäße Materialverstärkung wird genügend Spaltrohmaterial in den jeweiligen Statorzahnspalt unter Druckbelastung verkeilt, um im Wesentlichen zwei Funktionen auszuüben: Erstens werden durch die Verkeilung bzw. Abstützung zwei definierte an sich gegenüberliegenden (in Umfangrichtung benachbarten) metallischen Statorzähnen gegen Abscherung fixierte Lagerstellen gebildet. Zweitens wird eine von diesen Lagerstellen kommende vom Innendruck generierte gegen die Biegespannung wirkende entlastende Reaktionskraft eingeprägt. Im Ergebnis wird durch die von den sich gegenüberliegenden metallischen Statorzähnen gebildeten Lagerstellen neben den Statorzahnstirnflächen eine zusätzliche Abstützung für das Spaltrohr an den Statorzahnspalten als überlastungsgefährdete Stellen sichergestellt. Das Spaltrohr ist im Bereich der Statorzahnspalten freitragend.

Erfindungsgemäß wird die Materialverstärkung mit Keilwirkung beispielsweise durch geeignet geformte und im Wesentlichen axial auf der Außenseite des Spaltrohrs verlaufende Rippen erreicht. Der Verlauf der Rippen am Spaltrohr ist erfindungsgemäß im Wesentlichen derart, dass sich die Rippen in der Einbaulage, d. h. bei im Luftspalt zwischen Innenrotor und Stator angeordnetem Spaltrohr, in von jeweils zwei benachbarten Statorzähnen gebildeten Spalten (Statorzahnspalten) formschlüssig verkeilen. Dies wird im Wesentlichen durch die Gestaltung des Verlaufs der Rippenflanken erreicht. Die einfachste Gestaltung des Rippenprofils ist dabei eine Trapezform, die einem Keil am nächsten kommt. Da die Kontur der Statorzahnköpfe hierzu komplementär zu formen ist, wird unter fertigungstechnischen Gesichtspunkt des Stators hier eine einfache geometrische Form bevorzugt. Grundsätzlich könnte der Verlauf der Kontur der Statorzahnköpfe aber beliebig kompliziert gestaltet sein und beispielsweise aus einer oder mehreren geometrischen Formen wie elliptischer Verlauf, kreisförmiger Verlauf, exponentieller Verlauf oder ähnliche, bestehen, solange damit erreicht wird, dass die Rippenflanken ein Hineinrutschen der Rippe in den Statorzahnspalt verhindern. Fertigungstechnisch ist daher ein annähernd trapezförmiger Verlauf bevorzugt.

Ergänzend können noch ein oder mehrere Stufen im Verlauf der Rippenflanken vorgesehen werden, um eine zusätzliche formschlüssige Abstützung der Rippen an den Statorzahnköpfen als Lagerstellen zu erreichen.

Damit sich genügend Spaltrohmaterial in Form der Rippen in den Spalten zwischen benachbarten Statorzähnen unter Druckbelastung verkeilen kann, um die zusätzliche Abstützung des Spaltrohrs an diesen überlastungsgefährdeten Stellen zu erreichten, wird neben der im Wesentlichen keilförmigen Ausformung des axialen Querschnittsprofils der Rippen die Rippenhöhe ausreichend dimensioniert. Hierzu ist die mit den Rippenflanken in Kontakt stehende Statorzahnkontur über den Bereich der erforderlichen Rippenhöhe entsprechend komplementär geformt. Mit anderen Worten wird durch die entsprechende Auslegung der Statorzahnkontur sichergestellt, dass die Rippen so hoch sind, dass das Spaltrohrmaterial unter Betriebsdruckbelastung vom Inneren des Spaltrohrs sich nur soweit durchbiegen kann, dass im gesamten Bereich des Spaltrohrs, besonders im Bereich der Statorzahnspalten die Vergleichsspannungen im Spaltrohrmaterial immer kleiner sind als die Festigkeitsgrenze des Spaltrohrmaterials. D. h., die Rippen dienen nicht wie in der DE 10 2012 011 316 A1 als Stützelemente zur Abstützung am Grund der jeweiligen Statorzahnspalte. Die Rippen stützen sich allein über die Rippenflanken an den Statorzahnköpfen als Lagerstellen ab. Im Ergebnis ist das erfindungsgemäße Spaltrohr im Bereich der Statorzahnspalten freitragend.

Die erfindungsgemäße Materialverstärkung löst so das bei Spaltrohren aus Kunststoff im Stand der Technik bestehende Problem. Bei einem herkömmlichen Spaltrohr ohne die erfindungsgemäßen Rippen würde Spaltrohrmaterial, das aufgrund des Statorzahnspalts nicht durch einen Statorzahn gestützt werden kann, nach außen, d. h. in den Spalt hinein gedehnt, durch den Statorzahnspalt hindurch gedrückt (extrudiert) und schließlich an den Flanken der Statorzähne abgeschert werden.

Weiterbildend können durch eine besondere Formung der Flanken der Rippen, die an diesen Stellen im Betrieb entstehenden Dehnungskräfte im Spaltrohrmaterial als Biegespannungen ohne lokale Überlastungen um die jeweilige Statorzahnkontur (bzw. Polzahnkontur) am jeweiligen Statorzahnspalt herumgeleitet werden.

Ein Spaltrohrmotor mit einem Spaltrohr aus Kunststoff kann somit hinsichtlich der Hochdruckfähigkeit verbessert werden, da ein Abscheren des Spaltrohrs an den Statorzähnen sowie eine Extrusion des Kunststoffs durch den Statorzahnspalt unter Druckbelastung verhindert werden.

Ein erfindungsgemäß verbesserter Spaltrohrmotor erreicht folgende Vorteile. Grundsätzlich wird bei einem Nassläufer-Aggregat mit hochdruckfestem Spaltrohr ein gegenüber herkömmlichen Aggregaten mit metallischem Spaltrohr höherer Wirkungsgrad erreicht. Aufgrund niedrigerer Wirbelstrom- und Magnetfeldverluste tritt im Betrieb des Aggregats weniger Abwärme auf. Auch ist das Aggregat hinsichtlich der Herstellungskosten günstiger, da ein Spaltrohr aus Kunststoff günstiger als eines aus Metall ist. Ein weiterer Vorteil besteht in der variablen Fertigungsmöglichkeit. So kann das erfindungsgemäße Spaltrohr als Spritzgussteil einzeln gefertigt werden oder direkt als Anspritzteil durch Umspritzen an den Stator angespritzt werden. Im letzteren Fall wird automatisch eine passgenaue formschlüssige Form der Rippen in die Statorzahnspalten sichergestellt.

Somit wird wenigstens eine der oben genannten Aufgaben mit einer Pumpe mit den Merkmalen des Anspruchs 1 gelöst.

D. h., eine erfindungsgemäße Pumpe weist einen Spaltrohrmotor auf, der einen Stator mit einem darin angeordneten Innenrotor aufweist, wobei der Stator und der Innenrotor flüssigkeitsdicht durch ein zwischen Stator und Innenrotor angeordnetes Spaltrohr, welches aus einem nicht-metallischem material besteht, voneinander getrennt sind. Der Stator weist Statorzähne auf, die radial in Richtung des Innenläufers verlaufen und mit zugehörigen Statorzahnstirnflächen einen Aufnahmeraum für den Innenrotor und das Spaltrohr definieren. Das Spaltrohr liegt an den Statorzahnstirnflächen zur Abstützung an. Erfindungsgemäß weist das Spaltrohr auf seiner dem Stator zugewandt n Oberfläche an Statorzahnspalten, die jeweils durch zwei zueinander benachbarte Statorzähne definiert sind, formschlüssig in die Statorzahnspalten eingepasste Rippen auf, die sich ausgehend von einem am Spaltrohr angeordneten Rippenfuß hinsichtlich einer in Umfangsrichtung des Spaltrohrs definierten Rippenstärke in radialer Richtung, d.h. in Richtung der Höhe der Rippen (Rippenhöhe), verjüngen. Ein Statorzahn besteht weiter aus jeweils einem Statorzahnschaft und einem Statorzahnkopf, der zwei Statorzahnkopfteile aufweist. Die Statorzahnkopfteile überragen jeweils in einer Umfangsrichtung des Spaltrohrs den zugehörigen Statorzahnschaft. Von Seitenlinien der Rippen gebildete Rippenflanken stehen über den Bereich der Rippenhöhe jeweils in Kontakt mit einer zu den Seitenlinien komplementär geformten Kontur der Statorzahnkopfteile als gegen Abscherung fixierte Lagerstellen. D. h., die Rippenhöhe kann entsprechend begrenzt werden. Die Statorzahnkontur und damit die Höhe der Rippen ist so ausgelegt, dass unter Betriebsdruckbelastung im gesamten Bereich des Spaltrohrs Vergleichsspannungen im Spaltrohr immer kleiner sind als die Festigkeitsgrenze des Spaltrohrmaterials.

Die Höhe der Rippen (27; 27a; 27b)ist bevorzugt größer als die Wandstärke des Spaltrohrs ausgeführt. Das Spaltrohr weist je nach Druckbelastung und Motordimension bevorzugt eine Wandstärke von 0,1 mm bis 2,0 mm auf. Die Rippe weist bevorzugt eine Höhe von 0,1 mm bis 4 mm auf.

Ein besonders bevorzugtes Querschnittsprofil der Rippen kann in einer ersten Ausführung wenigstens einen trapezförmigen Abschnitt mit einer ersten Grundlinie und einer ersten Dachlinie aufweisen. Die am Spaltrohr anliegende und in Umfangsrichtung des Spaltrohrs verlaufende erste Grundlinie weist eine erste Länge von bevorzugt 0,8 mm bis 5,0 mm auf. Die in der Statorzahnspalte angeordnete erste Dachlinie weist eine kürzere zweite Länge von bevorzugt 0,25 mm bis 3 mm auf.

Das Querschnittsprofil des trapezförmigen Abschnitts kann weiter durch zwei zueinander symmetrisch und im Wesentlichen gerade verlaufende Seitenlinien bestimmt sein. Die Seitenlinien verlaufen dabei jeweils in Bezug auf den Radius des
Spaltrohrs bevorzugt in einem Winkel im Bereich von 5 Grad bis 60 Grad. Zur Erzielung der Keilwirkung verlaufen die Seitenlinien ausgehend vom Rippenfuß nach innen, sodass sich die Rippe ausgehend vom am Spaltrohr angeordneten Rippenfuß hinsichtlich der in Umfangsrichtung des Spaltrohrs definierten Rippenstärke bzw. Rippenbreite in radialer Richtung verjüngt. Ergänzend sei hinsichtlich der Rippenlänge angemerkt, dass diese bei bzgl. des Spaltrohrs axial verlaufenden Rippen der Länge des Spaltrohrs entspricht. Bei spiralförmig oder schräg zur Achse des Spaltrohrs verlaufenden Rippen ist die Rippenlänge größer als die Länge des Spaltrohrs.

Bevorzugt sind die Rippen so ausgeformt, dass die Seitenlinien zur Meidung von lokalen Spannungsspitzen abgerundet von der Rippe in das Spaltrohr übergehen. Ein Übergang zwischen der Spaltrohraußenfläche und der jeweiligen Seitenlinien kann daher bevorzugt wenigstens einen Radius aus dem Bereich von 0,1 mm bis 5,0 mm aufweisen. Ein großer Radius an dieser Stelle kann zwar aufgrund einer Vergrößerung des magnetischen Spalts benachbarter Statorzähne zu einer geringeren Effizienz des Motors führen. Der Effizienzverlust auf der einen Seite kann aber für eine entsprechend höhere Druckfestigkeit eingetauscht werden.

Durch die erfindungsgemäße Keilwirkung des trapezförmigen Rippenprofils werden die lokalen Belastungsspitzen im Spaltrohr deutlich reduziert. Versuche haben gezeigt, dass sich beispielsweise bei einem Ausführungsbeispiel mit Rippen mit trapezförmigem Querschnittsprofil bei einem Betriebsdruck von 150 bar die maximal im Spaltrohrmaterial auftretenden Spannungen bei einem herkömmlichen Spaltrohr ohne Rippen von ca. 270 MPa auf ca. 60 MPa im Spaltrohr im Bereich der Statorzahnspalten verringern lassen. D. h., die Maximalbelastungen reduzieren sich um etwa das 4,5-fache. Damit kann bei Pumpen für hohe Drücke von Metall für das Spaltrohr auf Kunststoffe ausgewichen werden.

Wie oben angesprochen kann bei Beachtung der gewünschten Keilwirkung der Rippenflanken der Flankenverlauf weitestgehend beliebig gestaltet werden. Zusätzlich können in den Flankenverlauf auch Stufen vorgesehen werden, um die Rippenflanken zusätzlich im Statorzahnspalt abzustützen. In einer Weiterbildung kann beispielsweise das Querschnittsprofil der Rippen weiter wenigstens einen abschließenden rechteckförmigen Abschnitt mit einer zweiten Grundlinie und einer zweiten Dachlinie aufweisen. Die in Umfangsrichtung des Spaltrohrs verlaufenden zweite Grundlinie und zweite Dachlinie weisen hier bevorzugt jeweils eine Länge von 0,2 mm bis 4 mm. Die zweite Grundlinie ist dann auf der ersten Dachlinie angeordnet und kann derart kürzer sein, dass der rechteckförmige Abschnitt mit dem trapezförmigen Abschnitt jeweils am Ende jeder Seitenlinie des trapezförmigen Abschnitts eine Stufe (Abstufung) bildet. In dieser Ausführung setzt sich die Gesamthöhe der Rippe wenigstens aus einer ersten Höhe eines trapezförmigen Abschnitts und einer zweiten Höhe eines rechteckförmigen Abschnitts zusammen. Dabei verhält sich erste Höhe zur zweiten Höhe in etwa 1:1.

Bei der Weiterbildung können durch die zusätzliche Abstufung die im Spaltrohr im Bereich der Statorzahnspalten auftretenden Spannungswerte weiter reduziert werden. Versuche haben gezeigt, dass sich durch die Rippen der Weiterbildung bei einem Betriebsdruck von 150 bar die maximal im Spaltrohrmaterial auftretenden Spannungen bei einem herkömmlichen Spaltrohr ohne Rippen von ca. 270 MPa auf ca. 50 MPa im Spaltrohr mit den Rippen im Bereich der Statorzahnspalten weiter verringern lassen. D. h., die Maximalbelastungen reduzieren sich um etwa das 5,4-fache.

Bevorzugt gehen bei der Weiterbildung die Seitenlinien jeweils abgerundet von einer der Seitenlinien in die erste Dachlinie über. Dieser zweite Übergang zwischen einer der Seitenlinien und einer der Dachlinien folgt bevorzugt wenigstens einem Radius aus dem Bereich 0,1 mm bis 5,0 mm.

Hinsichtlich der Dimensionierung des Spaltrohrs sei angemerkt, dass die Wandstärke des Spaltrohrs als ein Dimensionierungsparameter grundsätzlich durch die Motordimension bestimmt ist und sich daher üblicherweise im Bereich von etwa 0,1 bis 2 mm bewegt.

Die weiteren Dimensionierungsparameter der erfindungsgemäßen rippenförmigen Materialverstärkungen sind im Wesentlichen im Hinblick auf den im Betrieb des Motors im Inneren des Spaltrohrs (oder Spalttopf) auftretenden Förderdruck auszulegen und können in Relation zur Wandstärke d des Spaltrohrs dimensioniert werden.

Als Dimensionierungsbereiche für die Dimensionierungsparameter einer erfindungsgemäßen Rippe in Relation zur Wandstärke des Spaltrohrs wurde gefunden: Die Rippenhöhe kann das 1-fache bis 20-fache der Wandstärke betragen. Die Krümmungsradien in den ersten und zweiten Übergängen können im Bereich des 0,8-fachen bis 10-fachen der Wandstärke liegen. Die Länge der Grundlinie der Rippen kann im Bereich von etwa dem 1,5-fachen bis 10-fachen der Wandstärke liegen. Die Länge der ersten Dachlinie kann im Bereich des 0,5-fachen bis 6-fachen der Wandstärke liegen. Die Länge der zweiten Dachlinie kann im Bereich von etwa dem 0,4-fachen bis 4-fachen der Wandstärke liegen.

Bei einem bestimmten Ausführungsbeispiel beträgt die Wandstärke d des Spaltrohrs 0,5 mm. Die Rippen wurden mit einem einzigen trapezförmigen Abschnitt gestaltet, wobei die Krümmungsradien der Übergänge mit einem Radius entsprechend der Wandstärke, d. h. d = 0,5 mm, die Rippenhöhe H mit dem Dreifachen der Wandstärke, d. h. 3xd = 1,5 mm, die Grundlinie der Rippen mit dem Achtfachen der Wandstärke, d. h., 8xd = 4 mm, die Dachlinie der Rippen mit dem Vierfachen der Wandstärke, d. h. 4x = 2 mm ausgelegt wurden. Der Winkel der Rippenflanken wurde auf 30° eingestellt.

Das Spaltrohr besteht idealerweise aus einem druckfesten und hochtemperaturbeständigen Material mit einem niedrigen elektrischen Leitwert, bevorzugt kleiner 10E-10 S/m. Besonders bevorzugt sind faserverstärkte Kunststoffe, beispielsweise Thermoplaste oder Duroplaste, die bevorzugt einen Dehnungskoeffizienten, insbesondere in einem Temperaturbereich von -40 °C bis 120 °C, ähnlich dem des Materials des Stators besitzen. Als Verstärkungsfasern eignen sich besonders Glasfasern, Kohlefasern, Kohlenstoff-Nanoröhrchen, Keramiken oder Aramide (wie z. B. Kevlarfasern).

Als konkrete Beispiele für Kunststoffe seien hier Polyphenylensulfid mit einem Glasfaseranteil von 40 % (PPS-GF40) oder Polyamid mit einem Glasfaseranteil von 35 % (PA66-GF35) genannt. Selbstverständlich ist auch die Verwendung anderer druckfester und hochtemperaturbeständiger Kunststoffe mit niedrigem Leitwert möglich. Ebenso kann der Füllstoffanteil je nach Anforderung variiert werden.

Das Spaltrohr kann als Einzelteil beispielsweise als Spritzgussteil hergestellt sein bzw. werden. Alternativ ist es auch möglich das Spaltrohr mit Teilen des Stators, beispielsweise mit einer Nutisolation der Statorzähne, materialschlüssig durch Anspritzen in den Stator zu integrieren.

Grundsätzlich bestehen die einzelnen Statorzähne jeweils aus einem radial gerichteten Statorzahnschaft, der zur Umwicklung mit einem Strang der Statorwicklung vorgesehen ist. Der Statorzahnschaft kann einen Statorzahnkopf mit der zugehörigen Statorzahnstirnfläche aufweisen. Der Statorzahnkopf bildet zusammen mit dem Statorzahnschaft in bekannter Weise eine Nut zur Aufnahme eines Stranges der Statorwicklung. Der Statorzahnkopf kann zwei Statorzahnkopfteile aufweisen, die jeweils in beide Umfangsrichtungen des Spaltrohrs den Statorzahnschaft überragen. Sich jeweils gegenüberliegende Statorzahnkopfteile benachbarter Statorzähne bilden jeweils eine Statorzahnspalte.

Der Stator sowie der Innenrotor sind üblicherweise jeweils als Paket übereinandergestapelter, entsprechend ausgestanzter Lamellenbelche, die mit einem elektrisch isolierenden Material ummantelt sind, gebildet.

Das axiale Querschnittsprofil der Statorzahnkopfteile ist erfindungsgemäß komplementär an das axiale Querschnittsprofil die Rippen des Spaltrohrs angepasst. Damit können die Querschnittsprofile der Statorzahnkopfteile quasi als Spritzformteil für die erfindungsgemäßen Rippen dienen, für den oben genannten Fall, bei dem das Spaltrohr durch Anspritzen bzw. Umspritzen des Stators mit dem Spaltrohrmaterial hergestellt wird.

Abschließend sei angemerkt, dass das erfindungsgemäße Spaltrohr auch an einem Ende zu einem Spalttopf verschlossen sein kann. Pumpen, bei denen bauartbedingt das Spaltrohr als Spalttopf ausgeführt ist, können von der Erfindung in gleichem Maße Gebrauch machen und profitieren, wie dies im Zusammenhang mit der Ausführung als Spaltrohr erläutert worden ist.

Das Prinzip der Erfindung ist auch für Klein- und Kleinstmotoren anwendbar. Dort kann der Luftspalt etwa 0,2 mm betragen. Die Wandung des Spaltrohrs ist dann ähnlich einer Folie ausgeführt, die im Bereich von Statorzahnspalten durch die erfindungsgemäßen Materialverstärkungen für hohe Betriebsdrücke ausgelegt werden kann.

Erfindungsgemäße Pumpenaggregate eignen sich besonders gut für Pumpen in Hochdruckanwendungen. Beispielsweise bei Flüssigkeitsringvakuumpumpen, Kompressoren, Verdrängerpumpen, Hydraulikpumpen, Förderpumpen, oder Prozesspumpen der Chemie- und Verfahrenstechnik, um nicht abschließend einige Beispiele zu nennen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter aufgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben", "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. In den Figuren zeigen:
Figur 1 eine schematische Querschnittsansicht eines 40°-Segments eines Spaltrohrmotors mit einem Spaltrohr gemäße der Erfindung;
Figur 2 eine perspektivische Ansicht eines Ausführungsbeispiels des erfindungsgemäßen Spaltrohrs mit Rippen;
Figur 3 einen Ausschnitt eines ersten Ausführungsbeispiels eines erfindungsgemäßen Spaltrohrs mit einer Rippe; und
Figur 4 einen Ausschnitt eines zweiten Ausführungsbeispiels eines erfindungsgemäßen Spaltrohrs mit einer Rippe.

Die Erfindung wird nachfolgend unter Bezugnahme auf die Figuren detailliert beschrieben. Die detaillierte Beschreibung dient der Information des Fachmanns und ist nicht beschränkend aufzufassen. In der nachfolgenden Beschreibung werden zahlreiche spezifische Einzelheiten dargelegt. Es versteht sich jedoch, dass Ausführungsformen der Erfindung auch ohne diese spezifischen Einzelheiten zur Anwendung kommen können. Bekannte Schaltungen, Strukturen und Verfahren werden nicht im Detail gezeigt oder erläutert, um das Verständnis der vorliegenden Beschreibung nicht zu erschweren.

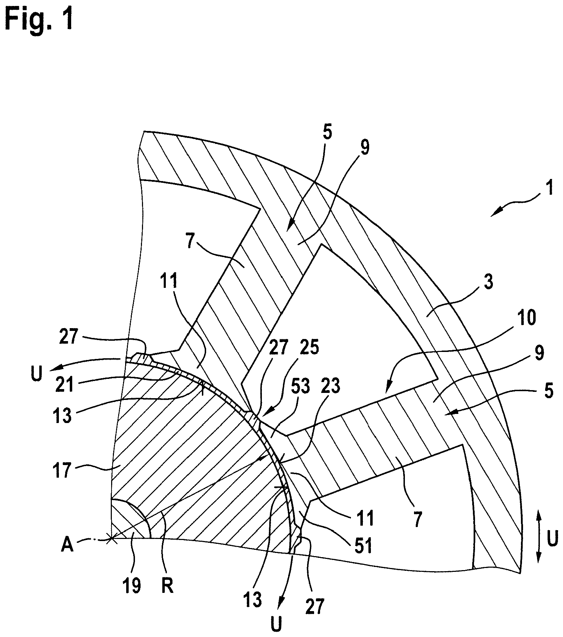

In Figur 1 zeigt eine schematische Querschnittsansicht eines 40°-Segments eines Spaltrohrmotors mit einem Spaltrohr. Die schematische Querschnittsansicht des 40°-Segments des Spaltrohrmotors entspricht einem Schnitt senkrecht zur Drehachse A des Innenrotors.

Ein Statorringsegment 3 weist radial nach innen gerichtete Statorzähne 5 auf. Jeder Statorzahn 5 weist einen Statorschaft 7 auf, der radial ausgehend von einem Statorzahnfuß 9 am Statorringsegment 3 nach innen gerichtet ist. An einem dem Statorzahnfuß 9 gegenüberliegenden Ende des Statorschafts 7 wird dieser von einem Statorzahnkopf 11 abgeschlossen.

Die Statorzähne 5 tragen jeweils einen Strang oder mehrere Stränge (nicht gezeigt) einer Statorwicklung (nicht gezeigt) in an den Statorzähnen 5 ausgebildeten Wicklungsnuten 10. Die Wicklungsstränge können in bekannter Weise je nach Phasenzahl des Motors miteinander verschaltet sein.

Der vollständige Stator (nicht gezeigt) weist neun (9) der gezeigten Statorringsegmente 3 auf. Grundsätzlich kann der Stator auch nur mit einen einzigen 360° Statorringsegment aufgebaut sein. Wenn der Stator aus mehreren Statorringsegmenten zusammengesetzt wird, kann ein solches Statorringsegment auch einen anderen Winkel als 40° aufweisen; die Anzahl der Statorringsegmente für einen vollständigen Stator, d. h. für 360°, ist dann entsprechend kleiner oder größer.

Statorzahnstirnflächen 13 der Statorzahnköpfe 11 definieren einen rohrförmigen Innenraum, in dem der Innenrotor 17 an einer Welle 19 als Drehachse A drehbeweglich befestigt ist. Der Rotor 17 umfasst eine gerade Anzahl von Rotorpolen (nicht gezeigt), an denen jeweils ein elektrisches Erregermagnetfeld nach außen austritt und mit einem aus den Statorzähnen 5 im Betrieb austretenden Statormagnetfeld wechselwirkt, welches durch eine in bekannter Weise entsprechende Bestromung der Statorwicklungen erzeugt wird.

Die dem Stator zugeordnete Statorwicklung weißt üblicherweise eine Strangzahl sowie einer Phasenzahl gleich oder größer 1 auf. Zur Erzeugung des Erregermagnetfelds kann der Innenrotor 17 beispielsweise Permanentmagnete (nicht gezeigt) aufweisen, die in hierfür vorgesehenen Taschen (nicht gezeigt) angeordnet sind.

Der Motor im Ausführungsbeispiel kann beispielsweise ein EC-Motor (engl. elektronically commutated motor), z. B. ein bürstenloser Gleichstrommotor (engl. brushless direct current motor, BLDC-Motor) als Antrieb für eine Pumpe für 150 bar Förderdruck sein. Hierzu sind Wicklungsenden (nicht gezeigt) der Statorwicklung in bekannter Weise für die bürstenlose Ausführung des Motors an eine Kommutierelektronik angeschlossen, die eingerichtet ist, durch leistungselektronische Schalter ein Drehfeld oder Wechselfeld zu erzeugen. Selbstverständlich ist die Anwendung nicht auf EC-Motoren beschränkt.

Die Wechselwirkung des Statormagnetfelds und des Erregermagnetfelds des Innenrotors 17 führt im Betrieb des Motors zu einem Antriebsmoment, das auf den Innenrotor 17 wirkt und ein Drehmoment an der Welle 19 bereitstellt. Im Betrieb des Motors dreht der auf der Welle 19 befindliche Innenrotor 17 in dem mit einem flüssigen Fördermedium gefüllten Spaltrohr 21 ein oder mehrere Laufräder der Pumpe zur Förderung des Fördermediums. Da der Innenrotor 17 in Kontakt mit dem Fördermedium steht, werden diese Motoren als Nassläufermotoren bezeichnet.

Sowohl der Stator als auch der Innenrotor 17 können grundsätzlich aus Volimaterial (monolithisch) aufgebaut sein, sind aber üblicherweise jeweils von mehreren gegeneinander elektrisch isolierten Lamellenblechen aus gestanztem Elektroblech zusammengesetzt. Vorzugsweise sind Stator und Innenrotor 17 als Lamellenpakete aus einzelnen gegeneinander elektrisch isolierten Lamellenblechen gestapelt aufgebaut, wobei diese im Wesentlichen deckungsgleich übereinander liegen. D. h., für den Stator sind die Lamellenbleche so aufeinander angeordnet, dass die Lamellenbleche, welche die Statorzähne 5 ausbilden, in axialer Richtung, d. h. in Richtung der Drehachse A der Welle 19, übereinander liegen, sodass deren Außenkanten in axialer Richtung, d. h. parallel zur Drehachse A der Welle 19 verlaufen. Entsprechend sind die Lamellenbleche für das den Rotor 17 bildende Lamellenpaket so aufeinander angeordnet, dass die oben erwähnten Taschenausnehmungen in den Blechlamellen, welche die Taschen bilden, in axialer Richtung übereinander zu liegen kommen.

Der Raum im Stator, in dem die Statorwicklungen angeordnet sind, und der Raum, in dem der Innenrotor 17 angeordnet ist, sind flüssigkeitsdicht durch ein Spaltrohr 21 bevorzugt aus einem elektrisch nicht leitenden Material - im Ausführungsbeispiel einem Kunststoff - voneinander getrennt. Spaltrohre aus elektrisch nicht leitfähigem Material, wie Kunststoff, weisen den Vorteil auf, dass diese den Magnetfluss zwischen Stator und Innenrotor 17 nicht beeinflussen bzw. stören. Das Spaltrohr 21 besteht aus einem der oben erwähnten druckfesten und ebenso hochtemperaturbeständigen Kunststoffe, z. B. Polyphenylensulfid mit einem Glasfaseranteil von 40 % (PPS-GF40).

Das Spaltrohr 21 ist so dimensioniert, dass es an der Innenseite des Stators, genauer an den Statorzahnstirnflächen 13 der Statorzähne 5 anliegt. Dadurch wird es im Betrieb gegen Innendrücke im Rotorraum von den Statorzähnen 5 abgestützt. Daher kann das Spaltrohr 21 in diesen Bereichen mit einer kleinen Wandstärke ausführt werden. Im Ausführungsbeispiel beträgt die Wandstärke d des Statorrohrs 21 etwa 0,5 mm.

Auf dem Spaltrohr 21 sind auf der dem Statorringsegment 3 zugewandte Oberflächen 23 Rippen 27 angeordnet. Die Rippen 27 sind Bestandteil des Spaltrohrs 21, d. h., das Spaltrohr 21 ist mit den Rippen 27 einstückig ausgeführt.

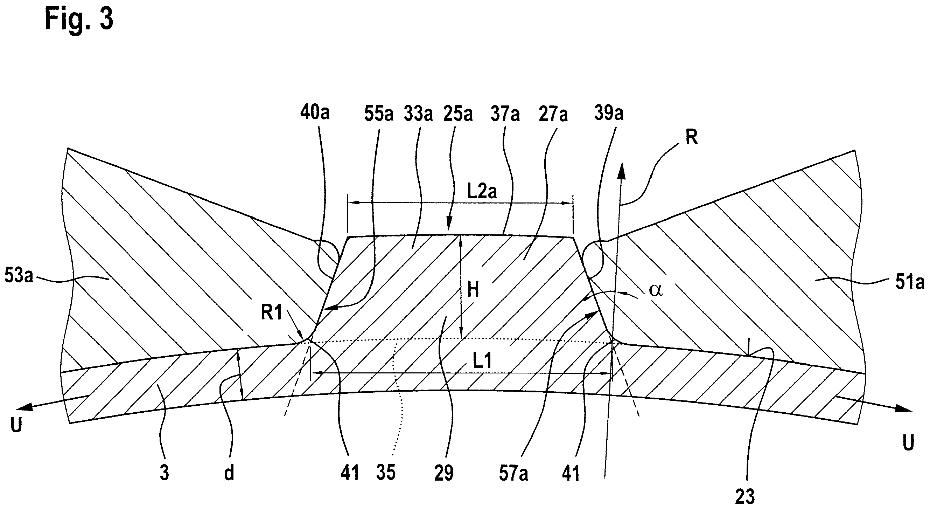

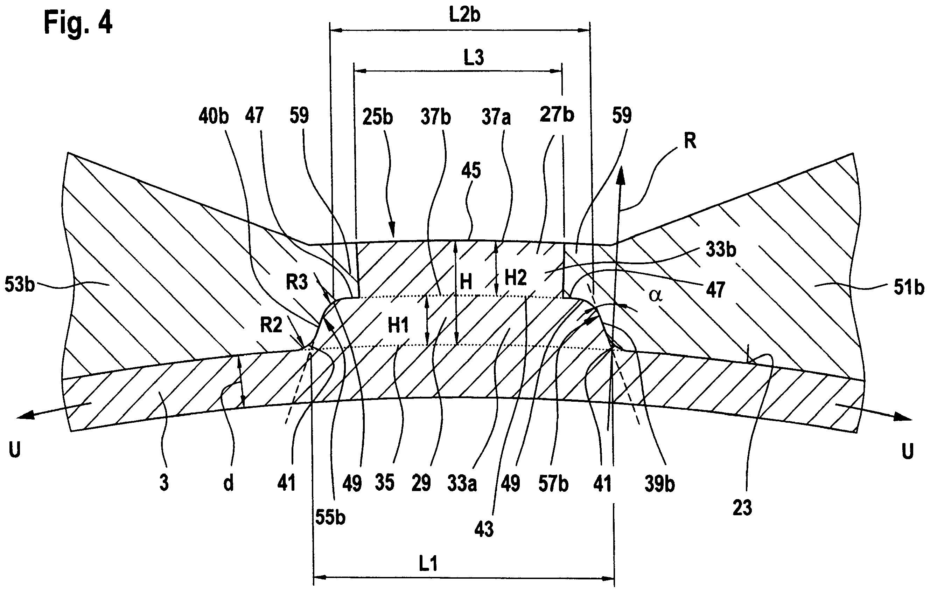

Die Rippen 27 sind so geformt, dass sie sich in Statorzahnspalten 25, die jeweils von zwei zueinander benachbarten Statorzähnen 5 gebildet sind, formschlüssig einpassen. Zur Erzielung des Keileffekts verjüngen sich die Rippen 27 ausgehend vom am Spaltrohr 21 angeordneten Rippenfuß 29 (s. Figuren 3 und 4) hinsichtlich einer in Umfangsrichtung U des Spaltrohrs 21 definierten Rippenstärke in radialer Richtung vom Spaltrohr 21 weg, d. h. nach außen. Im gesamten Statorzahnspalt 25 stehen die Rippen 27 mit den jeweiligen Statorzähnen in Kontakt, um Drucckräfte vom Spaltrohr 21 auf die Statorzähne 5 als Lagerstellen zur Entlastung des Spaltrohrs 21 zu übertragen.

Die Höhe H der Rippen 27 (27a in Figur 3) ausgehend vom Rippenfuß 29 (s. Figur 3) ist größer als die Wandstärke d des Spaltrohrs 21. Die Rippen 27 sind im gezeigten Ausführungsbeispiel mit einer Höhe H von ca. 1,5 mm (d. h. 3xd) ausgeführt.

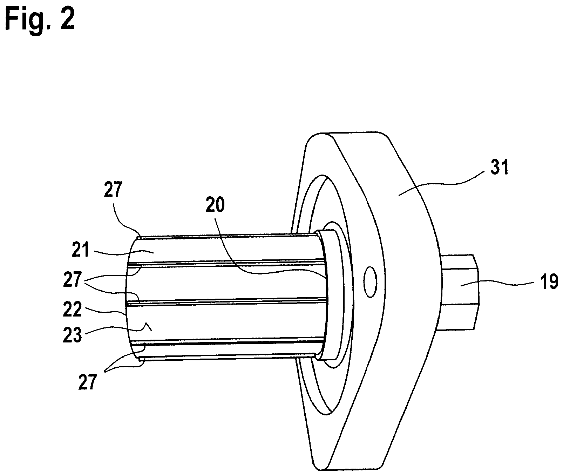

Figur 2 zeigt eine perspektivische Ansicht des Ausführungsbeispiels des Spaltrohrs 21 mit den Rippen 27. In der Darstellung befindet sich das Spaltrohr 21 auf den Innenrotor 17. Der aus den neun 40°-Statorringsegmenten 3 gebildete Stator ist nicht gezeigt. Am rechten Ende 20 des Spaltrohrs 21 schließt sich ein Motorflansch 31, mit dem das Spaltrohr 21 flüssigkeitsdicht, beispielsweise durch Einsatz einer O-Ringdichtung, verbunden ist. An dem Motorflansch 31 ist - bei vollständigem Motor - der Stator mit einem Statorgehäuse (nicht gezeigt) angeflanscht. Auf dem Spaltrohr 21 sind gut die im Ausführungsbeispiel äquidistant und parallel zueinander verlaufenden Rippen 27 zu sehen. Am rechten Ende 20 neben dem Flansch 31 befindet sich ein Ende der Welle 19 (Figur 1), an dem beispielsweise ein Laufrad der Pumpe angebracht werden kann.

Auch am dem Motorflansch 31 gegenüberliegenden Ende 22 wird das Spaltrohr 21 flüssigkeitsdicht, beispielsweise wieder mittels einer O-Ringdichtung verbunden, sodass der Innenrotor 17 im Betrieb im Fördermedium angeordnet ist und der Stator vom Fördermedium durch das Spaltrohr abgeschirmt wird. Bei Motoren mit Spaltrohr 21 wird das Fördermedium üblicherweise am Innenrotor 17 vorbei und durch das Spaltrohr 21 gefördert.

In einer alternativen Ausführung kann das Spaltrohr 21 auch am dem Motorflansch 31 gegenüberliegenden Ende 22 zu einem Spalttopf (nicht gezeigt) verschlossen sein. Bevorzugt ist ein solcher Spalttopf einstückig ausgeführt, d. h. ein das Spaltrohr zum Spalttopf verschließende Deckel kann grundsätzlich flüssigkeitsdicht an das Spaltrohr 21 beispielsweise durch Kleben oder Materialschluss durch Reibschweißen angefügt sein, besteht aber bevorzugt aus demselben Material wie das Spaltrohr und ist mit diesem materialschlüssig verbunden. D. h., ein Spalttopf ist bevorzugt als einstückiges Element ausgeführt.

Es sei angemerkt, dass die rippenförmigen Materialverstärkungen (Rippen 27) nicht zwingend parallel und geradlinig in axialer Richtung am Spaltrohr 21 oder Spalttopf verlaufen müssen. Beispielsweise können die Statorzahnspalten an einem Stator auch spiralförmig verlaufen. Ebenso können die Statorzahnspalten zwar geradlinig, aber schräg zur Spaltrohrachse verlaufen.

Die rippenförmigen Materialverstärkungen sind am Spaltrohr 21 oder Spalttopf komplementär und formschlüssig zu den Statorzahnspalten 25 ausgebildet und sind dementsprechend am Spaltrohr 21 oder Spalttopf angeformt. Mit anderen Worten kann ein Spalttopf mittels der Materialverstärkungen die gleichen Wirkungen und damit Vorteile erreichen, wie dies im Zusammenhang mit dem Spaltrohr erläutert worden ist.

Falls das Spaltrohr 21 durch Anspritzen bzw. Umspritzung des Stators hergestellt wird, ergibt sich die komplementäre Ausführung der Rippen 27 zu den Statorzahnspalten 25 quasi automatisch. In diesem Fall gibt es auch keine Beschränkungen hinsichtlich der Gestaltung des axialen Verlaufs der Statorzahnspalten 25, da das Spaltrohr 21 nicht als separates Teil in den Stator einfügbar ausgeführt sein muss.

Figur 3 zeigt einen Ausschnitt eines ersten Ausführungsbeispiels eines Spaltrohrs 21 mit einer der Rippen 27a. Die Form der Rippen 27a entspricht der Form der Rippen 27 in den Figuren 1 und 2.

Das Querschnittsprofil der gezeigten Rippe 27a ist im Wesentlichen durch einen trapezförmigen Abschnitt 33a mit einer ersten Grundlinie 35 und einer ersten Dachlinie 37a definiert. Da sich die im Querschnittsprofil trapezförmig ausgestaltete Rippe 27a vom Rippenfuß 29 ausgehend bezüglich der in Umfangsrichtung U des Spaltrohrs 21 definierten Rippenbreite radial nach außen verjüngt, fügt sich die Rippe 27a wie ein Keil in den Statorzahnspalt 25a ein. Unter Druckbelastung vom Inneren des Spaltrohrs 21 im Betrieb wird durch diese Keilwirkung der Rippe 27a eine Überlastung des Spaltrohrs 21 verhindert und eine zusätzliche Abstützung des Spaltrohrs 21 im Statorzahnspalt 25a an den Statorzähnen als Lagerstellen erreicht.

Die am Spaltrohr 21 anliegende und in Umfangsrichtung U des Spaltrohrs 21 verlaufende erste Grundlinie 35 besitzt eine erste Länge L1 mit ca. 3 mm (d. h. ca. 6xd). Die in der Statorzahnspalte 25a angeordnete erste Dachlinie 37a ist mit einer kürzeren zweite Länge L2a von ca. 2 mm (d. h. ca. 4xd) ausgeführt.

Das Querschnittsprofil des trapezförmigen Abschnitts 33a der Rippe 27a ist weiter in Umfangsrichtung U links und rechts durch zwei zueinander symmetrisch und im Wesentlichen geradlinig verlaufende Seitenlinien 39a und 40a bestimmt. Die Seitenlinien 39a und 40a verlaufen jeweils in Bezug auf den Radius R des Spaltrohrs 21 in einem Winkel α von 20 Grad derart, dass sich die Rippe 27a radial vom Spaltrohr 21 weg verjüngt und die Rippe 27a sich keilartig in die Statorzahnspalte 25a, die von den sich in Umfangsrichtung gegenüberstehenden Statorkopfteilen 51a, 53a gebildet ist, einfügt.

Die Seitenlinien 39a, 40a verlaufen abgerundet von der Rippe 27a in das Spaltrohr 21 bzw. umgekehrt. Ein Übergang 41 zwischen der Spaltrohraußenfläche 23 und jeweils einer der rechten Seitenlinie 39a und der linken Seitenlinie 40b ist bevorzugt konkav mit wenigstens einem Radius im Bereich von 0,1 mm bis 5,0 mm ausgeführt. Im Ausführungsbeispiel hat der Übergang 41 einem Radius von 0,5 mm (d. h. R1 = d).

Dadurch, dass die Rippe 27a keilförmig in die Statorzahnspalte 25a eingepasst ist, werden Dehnungen des Spaltrohrs 21 unter Druckbelastung auf die Flanken 55a, 57a der Statorkopfteile 51a, 53a verteilt. D. h., die Dehnungen des Spaltrohrs 21 werden als Biegespannungen weitestgehend kontinuierlich um die Kontur der Statorzahnkopfteile 51a, 53a geleitet, sodass eine Überlastung des Materials des Spaltrohrs 21 vermieden wird. Im Ergebnis ist das Spaltrohr 21 aus einem Kunststoff trotz dünnwandiger Ausführung für Hochdruckpumpenaggregate geeignet.

Figur 4 zeigt einen Ausschnitt eines zweiten Ausführungsbeispiels eines Spaltrohrs 21 mit einer Rippe 27b. Die Rippen 27b sind eine Weiterbildung des Prinzips der Rippen 27 bzw. 27a des Ausführungsbeispiels der Figuren 1 bis 3.

Das Querschnittsprofil der Rippe 27b weist weiterhin einen trapezförmigen Abschnitt 33a, ähnlich wie bei der Rippe 27a in Figur 3, auf. Der trapezförmige Abschnitt 33a ist jedoch mit einer kleineren Höhe H1 im Vergleich zur Höhe H der Rippe 27a ausgeführt. Die Höhe H1 beträgt im Ausführungsbeispiel etwa 0,5 mm (d. h. H1 = d). Daher sind auch die in Umfangsrichtung U links und rechts befindlichen zwei zueinander symmetrisch und im Wesentlichen geradlinig verlaufende Seitenlinien 39b und 40b etwas steiler ausgeführt. D. h., die Seitenlinien 39b und 40b verlaufen bei der Rippe 27b jeweils in Bezug auf den Radius R des Spaltrohrs 21 in einem Winkel α von etwa 20 Grad.

Auch der trapezförmige Abschnitt 33a der Rippe 27b verjüngt sich radial vom Spaltrohr 21 weg, sodass sich die Rippe 27b ebenfalls im Abschnitt 33a keilartig in die Statorzahnspalte 25b, die von den sich in Umfangsrichtung gegenüberstehenden Statorkopfteilen 51b, 53b gebildet ist, einfügt.

Das Querschnittsprofil der Rippen 27b weist im Vergleich zur Rippe 27a der Figur 3 zusätzlich einen rechteckförmigen Abschnitt 33b mit einer zweiten Grundlinie 43 und einer zweiten Dachlinie 45 auf. Die in Umfangsrichtung U des Spaltrohrs 21 verlaufenden Seitenlinien des Abschnitts 33b, d. h., die zweite Grundlinie 43 und zweite Dachlinie 45 sind im Wesentlichen gleich lang mit jeweils einer Länge L3 von 0,75 mm (d. h. 1,5xd). Die Höhe des rechteckförmigen Abschnitts 33b im Ausführungsbeispiel beträgt etwa 1,8 mm (d. h. 3,6xd).

Die Summe der Höhen H1 und H2 ergibt als Höhe H der Rippe 27b 2,55 mm.

Die zweite Grundlinie 43 schließt sich direkt an die erste Dachlinie 37b an bzw. ist mit dieser im gemeinsamen Bereich deckungsgleich. Gegenüber der ersten Dachlinie 37a ist die zweite Grundlinie 43 derart kürzer, dass der rechteckförmige Abschnitt 33b mit dem trapezförmigen Abschnitt 33a jeweils am Ende jeder Seitenlinie 39b, 40b eine Stufe 47 bildet.

Die Seitenlinien 39b, 40b gehen zur Meidung von lokalen Belastungsspitzen jeweils abgerundet in die erste Dachlinie 37b über. Ein zweiter Übergang 49 zwischen jeweils einer der Seitenlinien 39b, 40b und der ersten Dachlinie 37b ist mit wenigstens einem Radius R3 aus dem Bereich 0,1 mm bis 5,0 mm ausgeführt. Im Ausführungsbeispiel weist der Übergang 49 einem Radius von 0,5 mm auf.

Dadurch, dass die Rippe 27b mit dem trapezförmigen Abschnitt 33a keilförmig in die Statorzahnspalte 25b eingepasst ist, werden wie bei der Rippe 27a der Figur 3 Dehnungen des Spaltrohrs 21 unter Druckbelastung auf die Flanken der Statorkopfteile 51b, 53b verteilt. D. h., die Dehnungen des Spaltrohrs 21 werden als Biegespannungen weitestgehend kontinuierlich um die Kontur der Statorzahnkopfteile 51b, 53b geleitet, sodass eine Überlastung des Materials des Spaltrohrs 21 vermieden wird.

Bei der Rippe 27b liegen zusätzlich die Stufen 47 des trapezförmigen Abschnitts auf Vorsprüngen 59, die an den Statorkopfteilen 51 b, 53b vorgesehen sind, auf.

Es hat sich gezeigt, dass durch die Verringerung der Höhe H1 des trapezförmigen Abschnitts 33a gegenüber der Höhe H bei der Rippe 27a der Figur 3 zwar die effektive Keilfläche des Abschnitts 33a verkleinert ist. Durch die zusätzlichen Stufen 49, die sich auf den Vorsprüngen 59 der Statorkopfteile 51b, 53b abstützen, verteilen sich die im Spannungsverlauf der Rippe 27b auftretenden Belastungsspitzen auf die ersten Übergänge 49 und die Stufen 47. Im Ergebnis kann so die maximal im Bereich der Statorzahnspalten 25b auftretende Maximalspannung im Spaltrohr 21 weiter reduziert werden. D. h., das Spaltrohr 21 ist bei gleicher Wandstärke und Rippenhöhe für noch höhere Druckbelastung geeignet.

Im Ergebnis ist ein Spaltrohr 21 aus einem Kunststoff trotz dünnwandiger Ausführung aufgrund der Rippen 27, 27a, oder 27b für Hochdruckpumpenaggregate geeignet.

Wie bereits oben angemerkt, kann das vorstehend anhand der Ausführungsbeispiele beschriebene Spaltrohr auch an einem Ende zu einem Spalttopf verschlossen sein. Ein solcher Spalttopf findet sich üblicherweise in Pumpen, bei denen das Fördermedium nicht im Betrieb der Pumpe am Innenrotor vorbeiströmt. Ein Spalttopf kann von den vorgeschlagenen Verbesserungen im Zusammenhang mit einem Spaltrohr in gleichem Maße Gebrauch machen und profitieren, wie dies im Zusammenhang mit der Ausführung als Spaltrohr erläutert worden ist.

## Patentansprüche

1. Pumpe mit einem Spaltrohrmotor, der einen Stator (1) mit einem darin angeordneten Innenrotor (17) aufweist,
wobei der Stator (1) und der Innenrotor (17) flüssigkeitsdicht durch ein zwischen Stator (1) und Innenrotor (17) angeordnetes Spaltrohr (21), welches aus einem nicht-metallischem Material besteht, voneinander getrennt sind,
wobei der Stator (1) Statorzähne (5) aufweist, die radial in Richtung des Innenrotors (17) verlaufen und mit zugehörigen Statorzahnstirnflächen (13) einen Aufnahmeraum für den Innenrotor (17) und das Spaltrohr (21) definieren,
wobei das Spaltrohr (21) an den Statorzahnstirnflächen (13) anliegt und auf seiner dem Stator (1) zugewandten Oberfläche (23) in Statorzahnspalten (25), die jeweils durch zwei zueinander benachbarte Statorzähne (5) definiert sind, formschlüssig eingepasste Rippen (27; 27a; 27b) aufweist,
wobei die Rippen (27; 27a; 27b) ausgehend von einem am Spaltrohr (21) angeordneten Rippenfuß (29) eine Höhe (H) aufweisen und sich ausgehend vom Rippenfuß (29) hinsichtlich einer in Umfangsrichtung (U) des Spaltrohrs (21) definierten Rippenstärke in radialer Richtung verjüngen,
wobei ein Statorzahn (5) aus jeweils einem Statorzahnschaft (7) und einem Statorzahnkopf (11) besteht, wobei der Statorzahnkopf (11) zwei Statorzahnkopfteile (51a, 53a; 51b, 53b) aufweist, wobei die Statorzahnkopfteile (51a, 53a; 51b, 53b) jeweils in beide Umfangsrichtungen des Spaltrohrs (21) den Statorzahnschaft (11) überragen,
**dadurch gekennzeichnet,**
**dass** ein Querschnittsprofil der Rippen (27; 27a; 27b) wenigstens einen trapezförmigen Abschnitt (33a) mit einer Grundlinie (35) und einer Dachlinie (37) aufweisen, wobei die in Umfangsrichtung (U) des Spaltrohrs (21) verlaufende Grundlinie (35) am Spaltrohr (21) liegt und die Dachlinie (37a) in der Statorzahnspalte (25; 25a; 25b) angeordnet ist,
**dass** das Querschnittsprofil des trapezförmigen Abschnitts (33a) weiter durch die zwei zueinander symmetrisch und im Wesentlichen gerade verlaufenden Seitenlinien (39a, 40a; 39b, 40b) bestimmt ist, wobei die Seitenlinien (39a, 40a; 39b, 40b) jeweils in Bezug auf den Radius (R) des Spaltrohrs (21) in einem Winkel (α) im Bereich von 5°bis 60° verlaufen,
**dass** von den Seitenlinien (39a, 40a; 39b, 40b) der Rippen (27; 27a; 27b) gebildete Rippenflanken über den Bereich der Höhe (H) der Rippen (27; 27a; 27b) jeweils mit einer zu den Seitenlinien (39a, 40a; 39b, 40b) komplementär geformten Kontur der Statorzahnkopfteile (51a, 53a; 51b, 53b) als gegen Abscherung fixierte Lagerstellen in Kontakt stehen,
**dass** die Seitenlinien (39a, 40a; 39b; 40b) abgerundet von der Rippe (27; 27a; 27b) in das Spaltrohr (21) übergehen, wobei ein Übergang (41) zwischen der Spaltrohraußenfläche (23) und einer der Seitenlinien (39a, 39b) wenigstens einem Radius (R1) aus dem Bereich des 0,8 bis 10-fachen der Wandstärke (d) des Spaltrohres (21) folgt, und
**dass** die Statorzahnkontur und damit die Höhe (H) der Rippen (27; 27a; 27b) so ausgelegt ist, dass unter Betriebsdruckbelastung im gesamten Bereich des Spaltrohrs (21) Vergleichsspannungen im Spaltrohr (21) immer kleiner sind als die Festigkeitsgrenze des Spaltrohrmaterials.

2. Pumpe nach Anspruch 1, wobei die Höhe (H) der Rippen (27; 27a; 27b) ausgehend vom Rippenfuß (29) größer als die Wandstärke (d) des Spaltrohrs (21) ist.

3. Pumpe nach Anspruch 2, wobei
das Spaltrohr (21) eine Wandstärke (d) von 0,1 mm bis 2 mm oder von 0,5 mm aufweist; und/oder
die Rippen (27; 27a; 27b) eine Höhe (H) entsprechend dem 1 bis 10-fachen der Wandstärke (d) des Spaltrohres (21) aufweisen.

4. Pumpe nach einem der Ansprüche 1 bis 3, wobei
die am Spaltrohr (21) liegende und in Umfangsrichtung (U) des Spaltrohrs (21) verlaufende Grundlinie (35) eine erste Länge (L1) von dem 4,5 bis 10-fachen der Wandstärke (d) des Spaltrohres (21) aufweist, und
die in der Statorzahnspalte (25; 25a; 25b) angeordnete Dachlinie (37a) eine kürzere zweite Länge (L2a; L2b) von dem 0,5 bis 6-fachen der Wandstärke (d) des Spaltrohres (21) aufweist.

5. Pumpe nach einem der Ansprüche 1 bis 3, wobei
das wenigstens eine Querschnittsprofil der Rippen (27b) weiter wenigstens einen rechteckförmigen Abschnitt (33b) mit einer zweiten Grundlinie (43) und einer zweiten Dachlinie (45) aufweist.

6. Pumpe nach Anspruch 5, wobei die in Umfangsrichtung (U) des Spaltrohrs (21) verlaufende zweite Grundlinie (43) und zweite Dachlinie (45) jeweils eine Länge (L3) von dem 0,4 bis 8-fachen der Wandstärke (d) des Spaltrohres (21) aufweisen.

7. Pumpe nach Anspruch 5 oder 6, wobei
die zweite Grundlinie (43) auf der Dachlinie (37b) liegt und derart kürzer ist, dass der rechteckförmige Abschnitt (33b) mit dem trapezförmigen Abschnitt (33a) am Ende jeder Seitenlinie (39b, 40b) eine Stufe (47) ausbildet.

8. Pumpe nach Anspruch 7, wobei
die Seitenlinien (39b, 40b) jeweils abgerundet von einer der Seitenlinien (39b, 40b) in die Dachlinie (37b) übergehen.

9. Pumpe nach Anspruch 8, wobei ein zweiter Übergang (49) zwischen einer der Seitenlinien (39a, 40b) und der Dachlinie (37b) einem Radius (R3) aus dem Bereich des 0,8 bis 10-fachen der Wandstärke (d) des Spaltrohres (21) folgt.

10. Pumpe nach einem der Ansprüche 1 bis 9, wobei das Spaltrohr (21) aus einem druckfesten und hochtemperaturbeständigen Material mit einem elektrischen Leitwert kleiner 10E-10 S/m besteht.

11. Pumpe nach Anspruch 10, wobei das Spaltrohr (21) aus einem Kunststoff besteht.

12. Pumpe nach Anspruch 11, wobei
der Kunststoff ein faserverstärkter Kunststoff ist; oder
der Kunststoff ein faserverstärkter Kunststoff mit einem Dehnungskoeffizienten ähnlich dem des Materials des Stators ist.

13. Pumpe nach einem der Ansprüche 1 bis 12, wobei
das Spaltrohr (21) als zur Pumpe separates Einzelteil ausgebildet ist; oder
das Spaltrohr (21) mit Teilen einer Isolation des Stators (1) oder einer Nutisolation der Statorzähne materialschlüssig ausgebildet ist.

14. Pumpe nach einem der Ansprüche 1 bis 13, wobei das Spaltrohr (21) an einem Ende flüssigkeitsdicht zu einem Spalttopf verschlossen ist.

15. Pumpe nach Anspruch 14, wobei das Spaltrohr (21) an dem einen Ende flüssigkeitsdicht materialschlüssig zu einem Spalttopf verschlossen ist.

## Claims

1. A pump with a canned motor having a stator (1) with an internal rotor (17) disposed therein,
wherein the stator (1) and the internal rotor (17) are mutually separated fluid-tightly by a can (21) made of a non-metallic material which is disposed between the stator (1) and the internal rotor (17),
wherein the stator (1) has stator teeth (5) which extend radially in the direction of the internal rotor (17) and define with appurtenant stator-tooth end faces (13) a receiving space for the internal rotor (17) and the can (21),
wherein the can (21) lies against the stator-tooth end faces (13) and has on its surface (23) facing the stator (1), in stator-tooth gaps (25) which are respectively defined by two mutually adjacent stator teeth (5), ribs (27; 27a; 27b) fitted in in a form-locking manner,
wherein the ribs (27; 27a; 27b) have a height (H) starting out from a rib root (29) disposed on the can (21), and taper in the radial direction, starting out from the rib root (29), with respect to a rib thickness defined in the circumferential direction (U) of the can (21),
wherein a stator tooth (5) is composed of respectively a stator tooth shank (7) and a stator tooth head (11), wherein the stator tooth head (11) has two stator-tooth-head members (51a, 53a; 51b, 53b), wherein the stator-tooth-head members (51a, 53a; 51b, 53b) respectively protrude beyond the stator tooth shank (11) in both circumferential directions of the can (21),
**characterized in that**
a cross-sectional profile of the ribs (27; 27a; 27b) has at least a trapezoidal portion (33a) with a base line (35) and a roof line (37), wherein the base line (35) extending in the circumferential direction (U) of the can (21) lies on the can (21) and the roof line (37a) is disposed in the stator tooth gap (25; 25a; 25b),
the cross-sectional profile of the trapezoidal portion (33a) is further determined by the two side lines (39a, 40a; 39b, 40b) extending mutually symmetrically and substantially straight, wherein the side lines (39a, 40a; 39b, 40b) extend respectively at an angle (α) in the range of 5° to 60° with reference to the radius (R) of the can (21),
rib flanks formed by the side lines (39a, 40a; 39b, 40b) of the ribs (27; 27a; 27b) are respectively in contact, over the region of the height (H) of the ribs (27; 27a; 27b), with a contour of the stator-tooth-head members (51a, 53a; 51b, 53b) which is shaped complementarily to the side lines (39a, 40a; 39b, 40b), as bearing points fixed against shearing-off,
the side lines (39a, 40a; 39b; 40b) pass from the rib (27; 27a; 27b) into the can (21) in a rounded manner, wherein a transition (41) between the outer can surface (23) and one of the side lines (39a, 39b) follows at least one radius (R1) from the range of 0.8 to 10 times the wall thickness (d) of the can (21), and
the stator tooth contour and thus the height (H) of the ribs (27; 27a; 27b) is so adjusted that equivalent stresses in the can (21) are always smaller than the breaking point of the can material in the total region in the can (21) under operating pressure load.

2. The pump according to claim 1, wherein the height (H) of the ribs (27; 27a; 27b) starting out from the rib root (29) is greater than the wall thickness (d) of the can (21).

3. The pump according to claim 2, wherein
the can (21) has a wall thickness (d) of 0.1 mm to 2 mm or of 0.5 mm, and/or the ribs (27; 27a; 27b) have a height (H) corresponding to 1 to 10 times the wall thickness (d) of the can (21).

4. The pump according to any of claims 1 to 3, wherein
the base line (35) lying on the can (21) and extending in the circumferential direction (U) of the can (21) has a first length (L1) of 4.5 to 10 times the wall thickness (d) of the can (21), and
the roof line (37a) disposed in the stator tooth gap (25; 25a; 25b) has a shorter second length (L2a; L2b) of 0.5 to 6 times the wall thickness (d) of the can (21).

5. The pump according to any of claims 1 to 3, wherein the at least one cross-sectional profile of the ribs (27b) further has at least one rectangular portion (33b) with a second base line (43) and a second roof line (45).

6. The pump according to claim 5, wherein the second base line (43) and second roof line (45) extending in the circumferential direction (U) of the can (21) respectively have a length (L3) of 0.4 to 8 times the wall thickness (d) of the can (21).

7. The pump according to claim 5 or 6, wherein the second base line (43) lies on the roof line (37b) and is shorter such that the rectangular portion (33b) forms with the trapezoidal portion (33a) a step (47) at the end of each side line (39b, 40b).

8. The pump according to claim 7, wherein the side lines (39b, 40b) respectively pass from one of the side lines (39b, 40b) into the roof line (37b) in a rounded manner.

9. The pump according to claim 8, wherein a second transition (49) between one of the side lines (39a, 40b) and the roof line (37b) follows a radius (R3) from the range of 0.8 to 10 times the wall thickness (d) of the can (21).

10. The pump according to any of claims 1 to 9, wherein the can (21) is made of a pressure-resistant and high-temperature-resistant material having an electrical conductance of less than 10E-10 S/m.

11. The pump according to claim 10, wherein the can (21) is made of a plastic.

12. The pump according to claim 11, wherein
the plastic is a fiber-reinforced plastic; or
the plastic is a fiber-reinforced plastic with an index of expansion similar to that of the material of the stator.

13. The pump according to any of claims 1 to 12, wherein the can (21) is configured as a single part separate from the pump; or the can (21) is configured in material-locking manner with parts of an insulation of the stator (1) or with a groove insulation of the stator teeth.

14. The pump according to any of claims 1 to 13, wherein the can (21) is closed at one end fluid-tightly to form a can-pot.

15. The pump according to claim 14, wherein the can (21) is closed at one end fluid-tightly in material-locking manner to form a can-pot.

## Revendications

1. Pompe ayant un moteur à gaine qui comporte un stator (1) et un rotor intérieur (17) y étant agencé,
cependant que le stator (1) et le rotor intérieur (17) sont séparés l'un de l'autre de manière étanche aux liquides par une gaine (21) qui est agencée entre le stator (1) et le rotor intérieur (17) et qui consiste en un matériau non-métallique,
cependant que le stator (1) comporte des dents de stator (5) qui sont disposées radialement en direction du rotor intérieur (17) et définissent par des faces frontales correspondantes de dents de stator (13) un espace de logement pour le rotor intérieur (17) et la gaine (21),
cependant que la gaine (21) est placée contre les faces frontales de dents de stator (13) et comporte sur sa surface (23) tournée vers le stator (1), dans des interstices de dents de stator (25) respectivement définis par deux dents de stator (5) voisines entre elles, des ailettes (27; 27a; 27b) ajustées par liaison de forme,
cependant que les ailettes (27; 27a; 27b) présentent, à partir d'une base d'ailette (29) agencée à la gaine (21), une hauteur (H), et s'effilent en direction radiale depuis la base d'ailette (29) quant à une épaisseur d'ailette définie dans la direction périphérique (U) de la gaine (21),
cependant qu'une dent de stator (5) consiste respectivement en une tige de dent de stator (7) et en une tête de dent de stator (11), la tête de dent de stator (11) comprenant deux parties de tête de dent de stator (51a, 53a; 51b, 53b), cependant que les parties de tête de dent de stator (51a, 53a; 51b, 53b), respectivement dans les deux directions périphériques de la gaine (21), dépassent la tige de dent de stator (11),
**caractérisé**
**en ce qu**'un profil de coupe transversale des ailettes (27; 27a; 27b) comporte au moins une section trapézoïdale (33a) ayant une ligne de base (35) et une ligne de crête (37), cependant que la ligne de base (35) allant dans la direction périphérique (U) de la gaine (21) se trouve à la gaine (21) et que la ligne de crête (37a) est disposée dans l'interstice de dents de stator (25; 25a; 25b),
**en ce que** le profil de coupe transversale de la section trapézoïdale (33a) est en outre déterminé par les deux lignes latérales (39a, 40a; 39b, 40b) symétriques entre elles et essentiellement droites, cependant que les lignes latérales (39a, 40a; 39b, 40b) forment respectivement par rapport au rayon (R) de la gaine (21) un angle (α) compris entre 5° et 60°,
**en ce que** des flancs d'ailettes constitués par les lignes latérales (39a, 40a; 39b, 40b) des ailettes (27; 27a; 27b) sont, sur la zone de la hauteur (H) des ailettes (27; 27a; 27b), respectivement en contact avec un contour des parties de tête de dent de stator (51a, 53a; 51b, 53b) formé de manière complémentaire aux lignes latérales (39a, 40a; 39b, 40b), lesdites parties de tête faisant office de points d'appui fixés contre le cisaillement,
**en ce que** les lignes latérales (39a, 40a; 39b, 40b) passent de manière arrondie de l'ailette (27; 27a; 27b) à la gaine (21), cependant qu'un passage (41) entre la surface extérieure de la gaine (23) et une des lignes latérales (39a, 39b) suit au moins un rayon (R1) compris entre 0,8 fois et 10 fois l'épaisseur de paroi (d) de la gaine (21), et
**en ce que** le contour de dent de stator et par conséquent la hauteur (H) des ailettes (27; 27a; 27b) est configuré de telle façon que, sous charge de pression de fonctionnement, dans toute la zone de la gaine (21) des tensions comparatives sont toujours plus faibles dans la gaine (21) que la limite de résistance du matériau de la gaine.

2. Pompe selon la revendication 1, cependant que la hauteur (H) des ailettes (27; 27a; 27b) est, depuis la base d'ailette (29), supérieure à l'épaisseur de paroi (d) de la gaine (21).

3. Pompe selon la revendication 2, cependant que
la gaine (21) a une épaisseur de paroi (d) comprise entre 0,1 mm et 2 mm ou de 0,5 mm ; et/ou
les ailettes (27; 27a; 27b) présentent une hauteur (H) correspondant à entre 1 et 10 fois l'épaisseur de paroi (d) de la gaine (21).

4. Pompe selon une des revendications de 1 à 3, cependant que
la ligne de base (35) se trouvant à la gaine (21) et allant dans la direction périphérique (U) de la gaine (21) présente une première longueur (L1) de 4,5 à 10 fois l'épaisseur de paroi (d) de la gaine (21), et
la ligne de crête (37a) se trouvant dans l'interstice de dents de stator (25; 25a; 25b) présente une deuxième longueur (L2a; L2b) plus courte comprise entre 0,5 et 6 fois l'épaisseur de paroi (d) de la gaine (21).

5. Pompe selon une des revendications de 1 à 3, cependant que
le au moins un profil de coupe transversale des ailettes (27b) comporte en outre au moins une section rectangulaire (33b) ayant une deuxième ligne de base (43) et une deuxième ligne de crête (45).

6. Pompe selon la revendication 5, cependant que la deuxième ligne de base (43) allant dans la direction périphérique (U) de la gaine (21) et la deuxième ligne de crête (45) présentent respectivement une longueur (L3) comprise entre 0,4 et 8 fois l'épaisseur de paroi (d) de la gaine (21).

7. Pompe selon la revendication 5 ou 6, cependant que
la deuxième ligne de base (43) se trouve sur la ligne de crête (37b) et est plus courte de telle façon que la section rectangulaire (33b) forme avec la section trapézoïdale (33a) un cran (47) à l'extrémité de chaque ligne latérale (39b, 40b).

8. Pompe selon la revendication 7, cependant que
les lignes latérales (39b, 40b) passent respectivement de manière arrondie d'une des lignes latérales (39b, 40b) à la ligne de crête (37b).

9. Pompe selon la revendication 8, cependant qu'un deuxième passage (49) entre une des lignes latérales (39b, 40b) et la ligne de crête (37b) suit un rayon (R3) compris entre 0,8 fois et 10 fois l'épaisseur de paroi (d) de la gaine (21).

10. Pompe selon une des revendications de 1 à 9, cependant que la gaine (21) consiste en un matériau résistant à la pression et aux températures élevées, ayant une conductibilité électrique inférieure à 10E-10 S/m.

11. Pompe selon la revendication 10, cependant que la gaine (21) consiste en une matière plastique.

12. Pompe selon la revendication 11, cependant que
la matière plastique est une matière plastique renforcée par des fibres ; ou
la matière plastique est une matière plastique renforcée par des fibres ayant un coefficient de dilatation semblable à celui du matériau du stator.

13. Pompe selon une des revendications de 1 à 12, cependant que
la gaine (21) est réalisée sous forme de pièce distincte de la pompe ; ou
la gaine (21) est réalisée par liaison de matière avec des parties d'une isolation du stator (1) ou d'une isolation de rainures des dents de stator.

14. Pompe selon une des revendications de 1 à 13, cependant que la gaine (21) est fermée à une extrémité de manière étanche aux liquides de manière à constituer un pot d'entrefer.

15. Pompe selon la revendication 14, cependant que la gaine (21) est fermée à la une extrémité de manière étanche aux liquides par liaison de matière de manière à constituer un pot d'entrefer.
